# EUROPEAN PATENT APPLICATION

(11) **EP 0 961 262 A1**
(43) Date of publication of application: **01.12.1999**
(21) Application number: 98401268.2
(22) Date of filing: 27.05.1998
(51) Int. Cl.: G10H 1/00

(54) **Problem-solving using an improved constraint satisfaction problem formulation**

(71) Applicant: Sony France S.A., 75831 Paris Cedex 17 (FR)
(72) Inventor: Pachet, Francois, 75005 Paris (FR); Roy, Pierre, 75005 Paris (FR)
(74) Representative: Thévenet, Jean-Bruno

(57) **Abstract**

A problem-solving technique involves the formulation of Constraint Satisfaction Problems (CSPs) in terms of variables at different levels in a hierarchy and in terms of constraints holding on respective variables at different levels in the hierarchy. Typically, a variable at a lower level in the hierarchy is a component of a variable at the next higher level in the hierarchy. For example, in the case of a simple geometrical problem involving the finding of rectangles which do not overlap, the lower-level variable is a point whereas the higher-level variable is a rectangle, which is defined by the points corresponding to its vertices. In this example, some constraints hold on points only whereas other constraints hold on rectangles only. Moreover, some constraints can hold on variables at different levels in the hierarchy. Formulation of CSPs in this way exploits the natural structure existing in problems in numerous domains and thereby reduces the time taken for the resolution of the problem to be calculated.

## Description

The present invention relates in general to the field of problem-solving by formulation of problems as Constraint Satisfaction Problems (CSP). More particularly, the invention relates to application of an improved CSP formulation, in structured domains, by use of variables having a hierarchical relationship (notably, a "pan-whole" relationship) and of constraints applicable to variables at different levels in the hierarchy.

Constraint Satisfaction techniques (CSP) have been increasingly used for solving difficult combinatorial problems recently, thanks to the availability of efficient algorithms and data structures. CSP are attractive because they allow problems to be stated in a simple declarative way, as 1) a set of variables, having predetermined domains, and 2) a set of constraints, usually taken off-the-shelf from a constraint library, which hold their own solution mechanism.

Today, most problems solved by these techniques traditionally belong to the field of operational research and combinatorial optimization. These problems are usually formulated using some kind of mathematical representation, such as graph theory. A typical consequence of this formulation is that the domains of the constrained variables are "flattened out", and the whole problem is stated in terms of atomic values (that is values which are irreducible to a smaller component), such as integers or real numbers. Somehow, the semantics of the domains is integrally represented by the constraints, and the domains of variables have no direct interpretation. This approach is efficient in cases when the resulting constraint systems contain only well-known constraints, such as basic arithmetic constraints, or combinations thereof, or so-called "global constraints", for which generic, parameterized solving algorithms were developed. In this context see, for example, the article "Introducing global constraints in CHIP" by N.Beldiceanu and E. Contejean [Math. Comput. Modelling, 20(12):97-123,1994]. This typically occurs for problems which have already been subject of formalisation in fields such as operational research: scheduling, layout-cutting, etc.

The present inventors consider that CSP techniques can be much more generally applied in fields where 1) problems have not been formalized mathematically and 2) domains are naturally structured. As one example, tins is typically the case in the field of multimedia, where there is a growing pool of new problems, which call for efficient solution techniques, and in which the underlying ontologies are not easily reduced to mathematical entities such as integers or real numbers. However, applying CSP techniques in this context raises an important problem in formulation, by definition, since the reduction of problems to flattened representations is either impossible or unnatural. In this context, it would be advantageous to formulate constraint problems in a manner which allows 1) underlying ontologies of structured objects to be taken into account, and 2) efficient solution to be achieved using traditional CSP techniques.

Preferred embodiments of the present invention provide problem-solving techniques, applicable in naturally-structured domains, in which constraint problems are formulated taking into account underlying ontologies of structured objects in a manner which allows efficient solution using traditional CSP techniques.

The present invention is related to the general issue of problem reformulation. CSP decomposition addresses the same problem but follows a bottom-up approach, starting from a flattened formulation, and trying to build clusters that minimize the number of search nodes in the resolution (see, for example, "Structuring techniques for constraint satisfaction problems" by R. Weigel and B.V. Faltings [Proc. of IJCAI '97, Nagoya, 418-423, 1997]). By way of contrast, the present invention follows a top-down approach which is interesting because it is based on meaningful abstractions for which models can exist already and implementations can be re-used.

Another way that has been considered for reducing the complexity of CSPs is to exploit topologies of already flattened CSPs, such as tree-structured ones (see, for example, "An Optimal Backtrack Algorithm for Tree-Structured Constraint Satisfaction Problems" by R.J. Bayardo and D.P. Miranker [Artificial Intelligence 71:159-181, 1994]). Such an approach is different from the present invention which seeks precisely to avoid use of flattened formulations. Moreover, even if the formulation according to the invention were capable of following this approach it would not exhibit a tree-like topology since there remain constraints holding "across" structured objects (in the case of the Automatic Harmonization Problem (AHP) discussed below, the instance constraints between consecutive notes, which create cycles).

According to the present invention constraint problems are formulated in structured domains by explicitly taking into account part-whole hierarchies when they occur at the problem formulation level rather than during execution. These relations allow the problem to be stated in a space where domains are smaller, thus gaining in efficiency of the resolution process. Additionally, the approach according to the present invention allows problems to be stated in a more natural way than using a classical, flattened representation of domains. In this respect, the present invention fulfils a basic aim of problem reformulation in that it identifies representation spaces where the domains are smaller and/or more knowledge is available.

The problem-solving techniques of the present invention will be described below in applications where it solves particular problems which arise in the field of processing music data, notably in the field of automatic harmonization and automatic composition of recitals. However, it is to be understood that the invention is not limited to these applications.

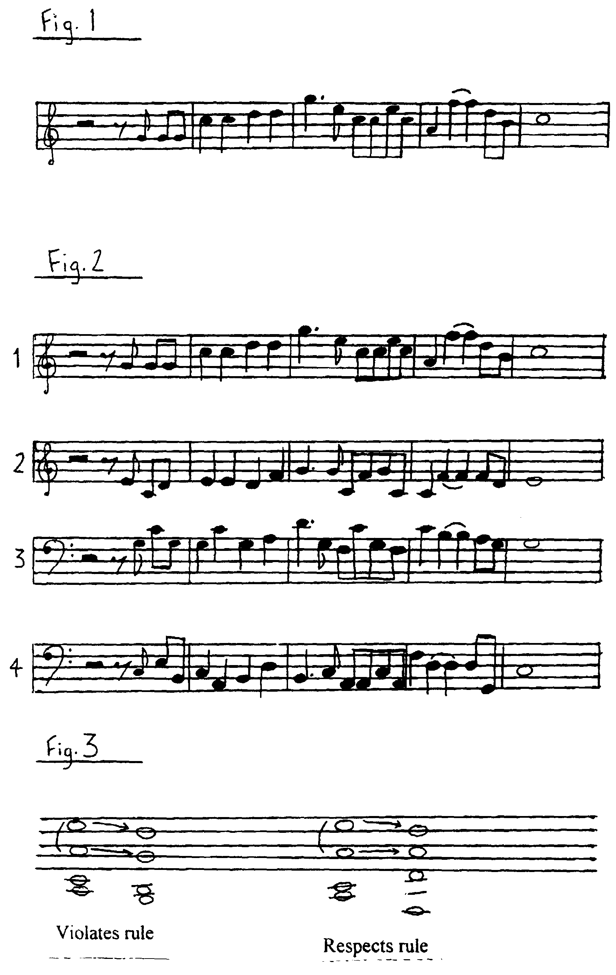

The automatic harmonization problem (AHP) consists in finding a harmonization of a given melody, such as the melody illustrated in Figure 1 (the first 18 notes of the French national anthem), or, more generally, any incomplete musical material. This harmonization must satisfy the rides of harmony (and counterpoint, if rhythm is taken into account). These rules are consensual and can be found in standard treatises on harmony, see for example "Theory of Harmony" by A. Schoenberg, University of California Press, Berkeley, 1978.

A standard exercise is to harmonize a given melody into a four-voice harmonization - Figure 2 illustrates a solution far the melody of Figure 1 (provided by application of the method according to the present invention). This is an interesting problem because it involves a lot of complex object structures (e.g. notes, intervals between notes, chords, intervals between chords, scales). Moreover, there are various types of constraints which interact intimately:
1) horizontal constraints on successive ***notes*** of a melody (e.g. "two successive notes should make a consonant interval")
2) vertical constraints on the ***notes*** making up a ***chord*** (e.g. "no interval of augmented fourth, except on the fifth degree", or "voices never cross"), and
3) constraints on ***sequences of chords**.*

Constraints on sequences of chords are the most famous and important in our context. These constraints are important because they are explicitly stated as holding on chords, where chords are sets of simultaneously occurring notes. This notion of "**chord**" introduces a natural part-whole relationship between chords and notes in the domain. In other words, a whole chord consists of a number of notes which constitute its constituent parts. It may be considered that a natural hierarchy exists with notes at a lower level and chords at a higher level.

Moreover, chords are not only sets of notes, but have various properties: a ***name***, computed from the intervals between the constituent notes, a ***degree***, representing a kind of abstraction with regard to a particular scale, and so forth. A typical constraint on sequences of chords is the parallel filth constraint, which states that: "parallel fifth between two successive chords are forbidden", that is, if a chord contains a fifth interval between two of its notes then the corresponding notes in the successive chord should not make up also a fifth interval (this is illustrated in Figure 3). Another similar constraint is the different degree constraint: "two successive chords should have different degrees".

The main interest of this musical problem for CSP is that the rules of harmony and counterpoint fit nicely in the formalism of finite domain CSP. It is therefore not surprising that several studies have proposed various solutions to solve the automatic harmonization problem using constraints (see below). It is to be noted that a human student typically solves these kinds of exercises quickly with little or no "back-tracking", whereas for non-human systems (a combinatorial viewpoint) they are difficult to resolve.

Historically, the first system to solve the AHP was probably Ebcioglu's Choral system (see "An Expert System for Harmonizing Chorales in the Style of J.-S. Bach" by K. Ebcioglu, from "Understanding Music with AI: Perspectives on Music Cognition", AAAI Press, 294-333, 1992). Choral's objective was to generate fully-fledged chorales in the style of J.-S. Bach from scratch. To do so, Ebcioglu devised an ad hoc constraint logic programming language (BSL), based on production rules integrated in a back-jumping-based algorithm. Choral includes several interacting modules for melody generation, harmonization and analysis, as well as modules to consider stylistic constraints. From a technical point of view, constraints are used mostly passively, to reject solutions produced by production rules. It is therefore difficult to assess the quality of the harmonization module only.

In "A Representation of Musical Dialects" by D.A. Levitt (from Machine Models of Music, ed. S.M. Schwanaeur and D.A. Levitt, MIT Press: 456-469, 1993), there is proposed a fully-fledged system for producing complete orchestrations according to various musical styles, such as ragtime, using constraints, but this work used constraint propagation techniques, in a perturbation model, rather than satisfaction techniques, and was therefore unable to solve our problem. In the same spirit, Steels' approach ["Learning the craft of musical composition" by L. Steels, ICMC, The Hague (Netherlands), 1986] aimed at building a system that could learn the rules of harmony itself, using machine learning techniques. Although not primarily designed for automatic, efficient harmonization, the system featured an interesting capacity to learn and use musical heuristics to speed up the search, and an ability to combine brute exploration with heuristic search, an important concern of CSP in the large.

"An Interactive Constraint-Based Expert Assistant for Music Composition" by R. Ovans and R. Davison [Ninth Canadian Conference on Artificial Intelligence, University of British Columbia, Vancouver, 76-81, 1992] was probably the first proposal to use arc-consistency techniques, now widespread in constraint-satisfaction. This work showed experimentally that techniques based on arc consistency were more adapted ad efficient than techniques based on earlier methods, such as pure back-jumping. However, this work used a flat representation of the harmonization problem (two voices only), and the results, although better than previous work, were still unsatisfactory.

The paper "Harmonizing music as a discipline of constraint logic programming" by C.P. Tsang and M. Aitken [ICMC '91, Montreal, 1991] proposed a solution of the four-voice harmonization problem using constraint logic programming techniques. Although the proposed system was operational, the authors till concluded that the approach was impractical, for efficiency reasons: it took more than one minute and 70 Megabytes of memory to solve the AHP on an 11-note melody. They employed a flattened representation of the musical domain: constraints were stated on "notes" variables only, themselves represented as integers.

More recently, the paper "CompoZe - Intention-Based Music Composition Through Constraint Programming" by M. Henz et al [8^{th} IEEE International Conference on Tools with AI, Toulouse (France), 1996] addressed the harmonization problem from a different viewpoint, emphasizing the need for development of a plan, prior to the resolution. This plan embodies knowledge about the desired harmonization, such as modulations and chord degrees. The harmonization problem is therefore much simpler, and solutions are found in a reasonable period of time (about one second for non-optimal solutions on a 133 MHz PC). The resulting system is interesting from a musical viewpoint because it allows users to effectively test the harmonization plan interactively. However, from the constraint satisfaction point of view there is no contribution since standard CSP techniques (namely the "Oz" system, see "The Oz programming model" by G. Smolka, from "Computer Science Today", ed. J. van Leenwen, LNCS, vol.1000, pp. 324-343, 1994) are used to solve a much simpler problem than ours (harmonization with chord degrees given).

The system proposed by Ballesta in "Contraintes et objets: clefs do voûte d'un outil d'aide à la composition" from "Recherches et applications en informatique musicale", by Marc Chemillier and Francois Pachet, Editions Hermes, pp.75-92, is probably the most complete attempt at solving the four-voice harmonization problem using recent constraint techniques (a Lisp version of the Ilog Solver system, see "A C++ implementation of CLP" by J.-F. Puget, Ilog, Paris Ilog Technical Report, 1994). The approach taken by Ballesta, however, is basically the same as that followed in the above-mentioned paper by Tsang and Aitken: the constraints are all stated on a flattened representation of the musical objects (notes and chords).

Indeed, all of these known systems are based on a representation of musical structures as atomic variables (that is, variables which are irreducible to a smaller component) and structural constraints. In other words, they are using an attribute-based approach for stating the problem. For instance, in the Ballesta work, 12 attributes are defined to represent one interval, such as the ***name*** of the interval (e.g. "diminished fourth"), its ***degree***, and its two ***extremities***. Nine constraints are then introduced to state the relations that hold between the various attributes of class Interval. For instance, one constraint links the name of the interval to the various attributes of its extremities (the octave and name of the note). As a result, constraints are defined using a low-level language (arithmetic), thus requiring a translation of harmonic and melodic properties, given in harmonic treatises, in terms of integers. For instance, in Ballesta's system, the parallel fifth constraint is represented as follows (actually a set of six 4-ary constraints):

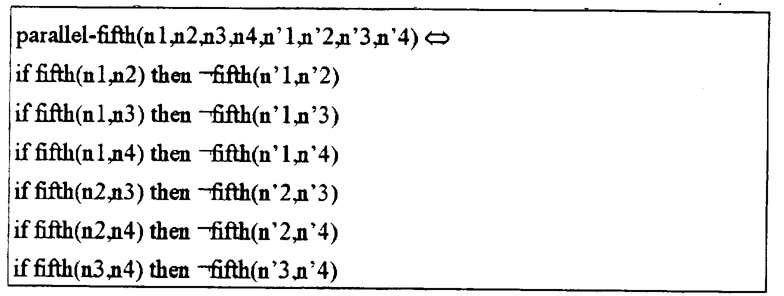

In Ovans' system the same constraints would be expressed as follows:

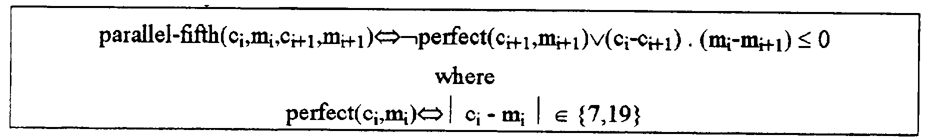

It is clear that this type of approach leads to the stating of a huge number of constraints and constrained variables. For instance, in Ballesta's system, one note instance is represented by 6 constrained variables. To solve the AHP on an N-note melody, his system uses 126×N - 28 constrained variables. The resulting system is expectedly slow, and clearly shows - through construction of a full system - the limitations of the "flattened" approach. Although the complexity of Ballesta's approach is difficult to evaluate since the system uses special classes of constraints, one can approximate the search space by 14³ⁿ, where *n* is the number of notes, *3n* is the number of constrained note variables, and 14 is the average number of possible notes for each variable. If *n* = 15 notes (typical case), the search space is then 14⁴⁵ = 10⁵².

The drawbacks of these prior art systems can be summed up as follows: firstly, there are too many constraints. Generally, the approaches proposed so far do not structure the representation of the domain objects (in this example notes, intervals and chords). When such a structure is proposed (as in Ballesta's system), objects are treated as passive clusters of constrained variables. Secondly, the constraints are treated uniformly, at the same level. This does not reflect the reality: a musician reasons at various levels of abstraction, working first at the note level, and then on chords, the most important harmonic decisions being made at the chord level (e.g. application of the parallel filth constraint). It has been realized that this separation can be taken into account in order to reduce complexity.

The present inventors reconsidered problems of this type in the light of a class-based approach for object + constraint problems, that is, with a reverse viewpoint from previous work in this field, Rather than "starling from constraints", and devising object structures that fit well with the constraints, it was decided to "start from the objects" and fit the constraints to them. Indeed, a lot of the properties of domain objects may be more naturally described as methods instead of constraints.

The present invention provides a new approach which exploits the natural structuring of objects in a problem (in the AHP example, chords). As seen from the above explanations, chords can be defined as groups of simultaneous notes having certain properties. The main interest of chords is that they form meaningful entities on which knowledge is usually formulated. For instance, the parallel fifth constraint typically holds between two chord objects, and not between 8 notes. The present invention integrates "part-whole" hierarchies of this type into the formulation of the constraint problem and allows the problem to be stated in a simpler way, while ensuring better efficiency. More particularly, the invention considers high-level objects of the problem (in the AHP example, chords) as possible values for constrained variables. In other words, the statement of the problem uses constrained variables whose domains contain "composite", as opposed to atomic, variables (in the AHP example, fully-fledged chords).

In order to implement this approach, in theory it would be necessary to compute all the possible high-level objects to put into the domains. The problem here is that no particular high-level object is given with the problem's definition, One solution would be to consider all possible high-level objects as possible values. Considering the AHP example, it will be seen that this it not realistic since it would involve consideration of all possible chords of harmony as possible values and this number is enormous. The present invention adopts a strategy whereby the resolution of the problem is split into two different phases: in a first time, only atomic objects of the problem are considered (in the AHP example, notes), and the constraints involving them; domain reduction is then used to remove from this initial problem atomic values which are not compatible with the given problem: finally all higher level objects which can be made up from the remaining atomic objects. It is remarkable that, with this approach, the number of possible high-level objects becomes reasonable.

Further features and advantages of the present invention will become clear from the following description of embodiments thereof, given by way of example, and illustrated by the accompanying drawings, in which:
Figure 1 shows an initial melody for which an automatic harmonization problem is defined;
Figure 2 illustrates a four-voice harmonization solution for the initial melody of Figure 1, obtained by application of the method according to the present invention;
Figure 3 illustrates the "parallel fifth" constraint;
Figure 4 illustrates a solution to a simple geometrical problem;
Figure 5 represents, in terms of point variables, a constraint C4 in the geometrical problem which is the subject of Figure 4; and
Figure 6 represents two possible approaches to formulation of the geometrical problem of Figure 4, in which:
Figure 6a) corresponds to a conventional formulation of the problem, and
Figure 6b) corresponds to a formulation according to a preferred embodiment of the present invention.

In order to clarify the exposition of the method according to the present invention, the following description considers a simple problem from the field of elementary geometry. Afterwards, an application of the method of the present invention to solution of the AHP will be presented.

Firstly, it should be recalled that a Constraint Satisfaction Problem (CSP) is defined as:
1) a set V of variables, each variable having a finite domain, and
2) a set of constraints.
Constraints are defined either in intension by a predicate holding on some variables, or in extension by the set of consistent tuples. A solution of a CSP is an instantiation of all variables that satisfies simultaneously all the constraints.

The present invention will be better understood from the following treatment which contrasts a conventional formulation of a simple problem in the field of planar geometry with a formulation according to a preferred embodiment of the present invention. The geometrical problem P can be stated as follows;

Find all pairs of non-trivial quadrilaterals satisfying the following set of constraints (C):
C1 - All vertices have integer co-ordinates in {1 .. n}.
C2 - For all vertices, the x and y co-ordinates are different.
C3 - All quadrilaterals are straight rectangles.
C4 - The two rectangles do not intersect.

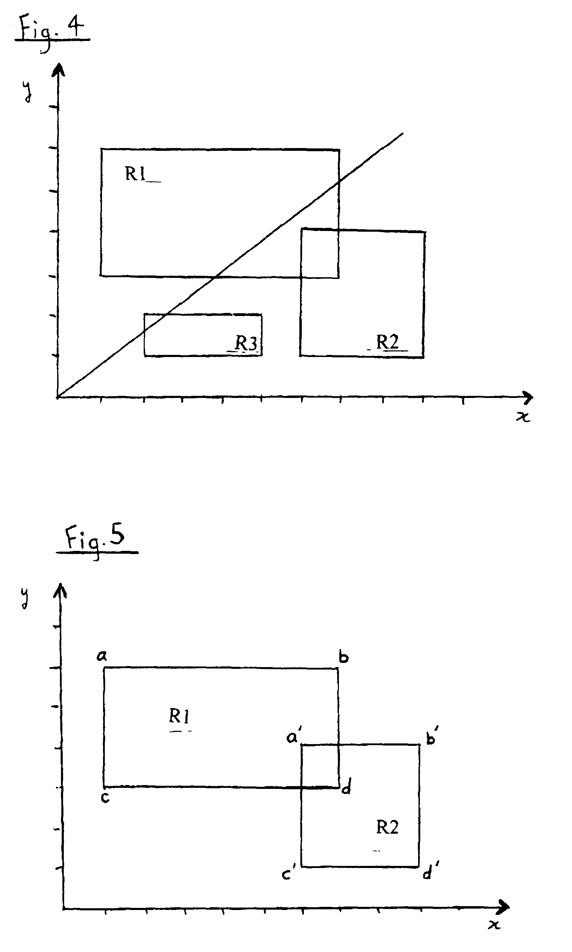

Solution of problem P for a case where n = 10 is illustrated by Figure 4. The pairs of rectangles {R1,R3} and {R2,R3} are possible solutions; pair {R1,R2} is not. In a space with a co-ordinate ranging from 1 to 6, there are 90 solutions.

The main task of formulating problem P is to identify the variables to be constrained.

### Conventional Formulation of the CSP

The conventional formulation consists in "flattening out" the domains, that is, specifying the problem only with point variables, considering here points as atomic entities. In this representation, the constraints are stated entirely in terms of point variables. The first three constraints would be stated as follows: where a, b c, d (respectively a',b',c',d') are the variables representing the co-ordinates of Rect1 (respectively, Rect2) and x and y are the functions yielding the x and y co-ordinates of the points (see Figure 5).
C1: unary constraints on each variable: dom(a) = dom(b) = dom(c) ... = {all points having integer co-ordinates in {1..n}}
C2: unary constraints on each variable: dom(a) = dom(b) = dom(c) ... = {all points with different co-ordinates}
C3: sets of four binary constraints for stating that each rectangle is "straight":
   x(a) = x(c); y(a) = y(b); x(b) = x(d); y(c) = y(d)
   x(a') = x(c'); y(a') = y(b'); x(b') = x(d'); y(c') = y(d')

The most important constraint, C4, is a 8-ary constraint, stated as follows:
x(b) < x(a') "Rect1 on the left of Rect2"
or x(a) > x(b') "Rect1 on the right of Rect2"
or y(c) > y(a') "Rect1 above Rect2"
or y(a) < y(c') "Rect1 below Rect2"

In this solution there are:
- 8 variables representing the 8 vertices, each one with a domain of size (n² - n).
- 9 constraints (C1 and C2 are represented as domains, 8 binary constraints for expressing C3, one 8-ary constraint for C4).

### Formulation of the CSP According to a Preferred Embodiment of the Invention

This formulation is based on exploiting natural structures: the rectangles themselves. Since the problem statement contains constraints involving rectangles (C4), and the domain is defined in terms of points, a natural solution consists in specifying a problem with *both* "rectangle variables" (that is variables whose domain is collection of rectangles) and point variables. The main interest of this solution is to allow the statement of constraints in a more natural manner, and to exploit the natural part-whole relation between rectangles and points.

In this formulation, constraints C1, C1and C3 would be stated similarly, but constraint C4 would then be stated as the following binary constraint:
not (intersects (Rect1, Rect2)).

In this solution there would be:
- 8 point variables (as in the first formulation)
- 2 additional variables, representing the 2 rectangles, each one with a domain of size N!/(N-4)!
   where N = n² - n (the number of possible points).
- the same constraints C1, C2 and C3 as in the first formulation
- 1 binary constraint for C4.

In the first formulation, constraints are difficult to state, because they involve only "lower-level" objects (in the above example, it will be appreciated that a constraint involving three rectangles would be extremely difficult to state according to this conventional formulation). In the formulation according to the preferred embodiment of the present invention, constraints are stated on higher-level objects (rectangles). Also, the constraints involve fewer variables (the arity of constraints is a crucial parameter for performance). In the above example, C4 has eight variables according to the first formulation, and only two in the second one.

Of course, the formulation according to the preferred embodiment of the invention raises a problem: how to build rectangles to create the domains for the two additional rectangle variables ? Creating these domains naively would involve the creation of a lot of objects: in our case it is roughly equal to the Cartesian product of domain sizes of the variables making up a rectangle. Although the collection of all possible rectangles in a finite 2-dimensional space is, of course, finite, it is practically unreasonable to build this collection prior to the resolution. This problem is overcome, according to the present invention, by adopting a two phase approach for tackling the problem, as described in greater detail below.

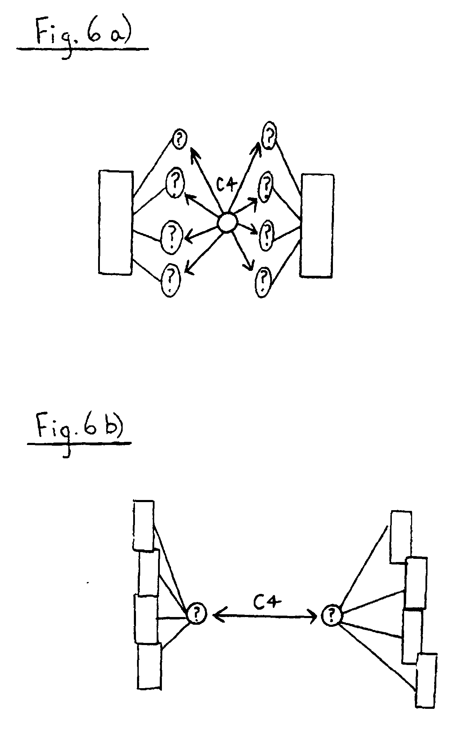

The above-described two approaches are graphically represented in Figure 6. Figure 6a) corresponds to a problem with partially instantiated objects, that is, objects whose attributes are constrained variables. In Figure 6b), constraints are stated between fully instantiated objects.

The approach according to the preferred embodiment of the present invention will now be described in greater detail by explaining how a part-whole relation between domain values may be introduced in the definition of a CSP. The idea is that a part-whole relation between domain values yields a natural partition of the set of variables and the set of constraints. For the sake of simplicity, only "one-level" part-whole relationships will be considered in the following explanation. However, it is to be understood that the technique of the present invention is applicable also to multi-level relationships (for practitioners in this field the generalization of the method to an arbitrary number of levels is straightforward).

### Definition 1: Part-wholed CSP

Let P be a CSP.

A parr-whole relation is defined as follows:
- *V* = *V1 ∪ V2*
- *R: V1 × V2 → {0,1}*
- *v1* R *v2* means that *v2* is a "part of" *v1*

This relation between variables induces a partition of the constraints into three sets, according to the nature of their variables. This partition is defined as follows:
*C* = *C*_{*1*} *∪ C*_{*2*} *∪ C*_{*mixed*} *with C*_{*1*} *∩ C*_{*2*} = *⌀ and C*_{*2*} *∩ C*_{*mixed*} = *⌀*
where the subset *C*_{*1*} (resp. *C*_{*2*}) consists of constraints involving only variables of *V1* (resp. *V2*), and where *C*_{*mixed*} contains variables of both *V1* and *V2.*

The present invention decomposes the resolution of P into the successive resolution of sub-problems holding only on subparts of *C*. The strategy is the following:
- in a first step, only atomic objects of the problem, and the constraints involving them, are considered, i.e. V1 and C1,
- then domain reduction is applied so as to remove inconsistent values from these initial problem values,
- then all higher level objects that can be made up with the remaining atomic values are computed - these objects make up the domains of the variables in V2,
- finally, the full problem can be solved as now defined in this second formulation. The strategy can be summarized, as follows:

### First phase

There is first created a CSP, P1, whose variables set is V1, and whose constraint set is C₁. A consistency algorithm is applied to P1, in order to reduce the size of the domains of its variables as much as possible.

### Intermediate Phase

The intermediate phase consists in reducing the domain of every *v*2 in V2. To do so, the domain of *v*2 is just restricted with respect to the new, reduced, domain of each *v*1 that satisfies *v*1 R *v*2.

### Second Phase

There is then created a CSP, P2, whose variable set is V = V1 ∪ V2, and whose constraint set is C₂ ∪ C_{mixed}. The domains of variables in V2 were reduced during the intermediate phase.

The complexity of the approach according to the preferred embodiment of the invention will now be evaluated, before application of this approach to the rectangle problem mentioned above and to the AHP.

The contribution made by the approach according to the preferred embodiment of the invention can be evaluated, as follows: let A be a set of *n* atomic objects. The size of the set of all n-uplets of A is card(A)^{*n*}. The set of composite objects can be seen as the image of A by a composition mapping, called *c*.

Considering a problem with two composite objects, and thus *2n* atomic objects, the complexity of a conventional "flattened" formulation is *(Card(A)*^{*n*}*)*^{*2*}. The complexity of the approach according to the preferred embodiment of the invention is *(Card(c(A*^{*n*}*)))*^{*2*}. Let *r* be the ratio *Card(A)*^{*n*}*/Card(c(A*^{*n*}*))*; *r* measures the "density" of composite objects in the space of all n-uplets. Since the ratio between the complexities of the two approaches is *r*^{*2*}, it can be deduced that the scarcer are composite objects, the more efficient is the approach according to the present invention.

In the case of the simple geometrical problem discussed above, concerning rectangles, the scheme according to the invention instantiates as follows:
the number of 4-plets is *n*^{*8*}, while the number of straight rectangles is *n!/(n-4)!*, which is approximated by *n*^{*4*}. Therefore, the ratio *r = n*^{*4*}.

The resolution scheme presented above can be generalized to problems involving more than two levels of composition. For instance, in the problem (P) there are two composition levels if we consider the points as atomic objects, but there are three levels (co-ordinates, points and rectangles) if we consider the points themselves as structures of two integers.

Once the CSP has been formulated using hierarchically-structured variables as described above, conventional CSP resolution techniques can be used within the framework of the two-phase resolution strategy. More particularly, the above-described approach and results can be applied to the AHP, by identifying the natural whole-pan relation between chord objects and notes. It is preferred to apply this approach making use of a fully-fledged, object-oriented library, the MusES system (see "Representing temporal musical objects and reasoning in the MusES system" by F. Pachet, G. Ramalho and J. Carrive, from Journal of New Music Research, 25(3):252-275, 1996), which contains a set of around 90 classes that represents the basic elements of harmony, such as notes, intervals, scales and chords. The constrained variables of our AHP problem have musical objects, provided by MusEs, in their domain (e.g. notes, chords, and intervals). The constraints hold directly on these high-level objects, using the methods defined in the corresponding classes, making use of the BackTalk system (see "Reifying Constraint Satisfaction in SmallTalk" by P. Roy & F. Pachet, from Journal of Object-Oriented Programming, 10(4):51-63, 1997) to state and solve the constraints (the BackTalk system allows constraints to be stated directly on objects using arbitrary methods defined in their classes). In this example, the constraints are instances of "block" and "perform" BackTalk constraints.

As a consequence of reifying chords as values for variables, the resulting system is simple to understand, because constraints can be stated directly using the language of chords. For instance, the rule forbidding the parallel fifth is simply defined by the following BackTalk expression:

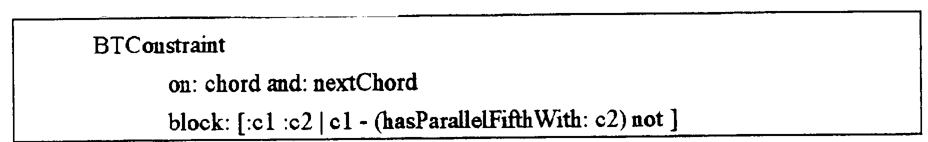

Moreover, using the approach according to the present invention, the problem to solve is much smaller, since for an n-note melody, only *5n* constrained variables are created (compared to *126n - 28* variables in Ballesta's attribute-based system). The Table below compares the time taken for solution of such AHPs according to two known methods and according to the present invention implemented as explained above.

**Table**

| | 11 notes | 12 notes | 16 notes |
|---|---|---|---|
| Tsang (CLP) | 60 seconds | ? | ? |
| Ballesta (ILOGSOLVER) | ? | 180 second | 240 seconds |
| INVENTION & BACKTALK & MUSES | 1 second | 1 second | 1.5 seconds |

As can be seen, the method of the present invention is at least one order of magnitude faster than previous approaches (reaching a speed comparable to that of human performance) on the full problem, without having to give the system a harmonization plan such as in the Henz et al approach mentioned above. Moreover, the amount of memory space needed for implementing the approach according to the invention is not excessive.

The above-described technique for solving the AHP can be implemented using a general-purpose computer, with suitable programming, and an interface designed to permit the user to enter the melody for which harmonization is required, additional constraints on the harmony to be generated, etc.. Moreover, the system can be designed as a module for integration in a music synthesizer or sequencer.

In addition to its application to AHP, the problem-solving technique of the present invention can be applied to many other problems and in may other contexts. In particular, as mentioned above the field of multimedia often includes domains which are naturally structured by part-whole relations and in which the technique of the present invention can be successfully applied. For example, the present invention has been successfully applied for the automatic composition of recitals.

When it is sought automatically to compose a recital, namely a sequence of pieces of music taken from a given repertoire, the recital must satisfy certain conditions, expressed as constraints. The present invention was applied to compose a recital where the pieces of music were taken from French Baroque harpsichord music and the constraints came from studies by well-known musicologists (In this case, "Music in the Baroque Era, from Monteverdi to Bach" by M. F. Bukofzer, Norton & Company, 1947). Typical constraints were "two contiguous pieces should be of a different type", and "all pieces should be in the same key". However, recitals are naturally structured into so-called "blocks": the introductory block, an optional block and a concluding block. Additional conditions must hold on these blocks. For instance, if there is an optional block, there has to be a concluding block. Other constraints hold on pieces within a block. For instance, the introductory block must begin by an "allemande" or a "pavane", and may include a "gigue", in between the first and third pieces.

Although several works exist devoted to designing specialized global constraints for building constrained sequences (see, for example, ""Sequence Constraint Solving in Constraint Logic Programming" by B. Baptiste et al, from International Conference on Logic Programming- Workshop on Logic Programming with Sets, 6^{th} IEEE Int. Conf. On Tools for Artificial Intelligence, TAI '94, New Orleans, 804-807, IEEE Computer Society Press, 1994), the approach according to the invention can be profitably applied here for reducing the search space, without requiring a specialized algorithm. The nature of the problem makes it fit naturally into the scheme according to the invention. More precisely, a part-whole hierarchy is identified (Recital/Block/Piece) and the constraint set is split into two parts, constraints holding only on pieces and constraints holding only on blocks. The resulting system is then efficient enough to handle large repertoires of musical pieces, which would otherwise be impracticable using standard CSP techniques.

## Claims

1. A method of solving Constraint Satisfaction Problems, comprising the steps of:
a) defining a first set (V1) of variables,
b) defining a second set (V2) of variables, the or each variable of the second set of variables being constituted from a plurality of variables from the first set of variables, such that a hierarchy of variables is created in which variables of the second set are at a higher level and variables of the first set at the next lower level in the hierarchy,
c) formulating the constraint satisfaction problem in terms of a set of constraints to be satisfied, at least one of the constraints holding on variables in the second set, and
d) resolving the constraint satisfaction problem,
wherein the constraint-satisfaction-problem-formulating step comprises the steps of:
i) creating a first constraint satisfaction problem (P1) whose variable set is said first set (V1) of variables,
ii) applying a consistency algorithm the first constraint satisfaction problem whereby to reduce the size of the domains of the variables in said set (V1), and
iii) reducing the domain of each variable (v2) in the second set (V2) which has one or more variables (v1) of the first set as a constituent part, by restricting the domain of each such variable (v2) of the second set with respect to the reduced domain of the corresponding variable from the first set.

2. A method of solving Constraint Satisfaction Problems, according to claim 1, wherein the constraint-satisfaction-problem-formulating step further comprises the step of:
iv) creating a second constraint satisfaction problem (P2) whose variable set is the union of the first (V1) and second (V2) sets of variables after domain reduction and whose constraint set is the union of the constraints (C₂) holding on the second set of variables and the constraints (C_{mixed}) holding both on variables of the first set (V1) of variables and on variables of the second set (V2) of variables.

3. A method of solving Constraint Satisfaction Problems, according to claim 1 or 2, wherein the variables of said first set of variables (V1) correspond to entities which cannot be reduced into smaller components.

4. A method of solving Constraint Satisfaction Problems, according to any previous claim, and comprising the step of defining one or more further sets of variables to form respective further levels in the hierarchy of variables, such that variables in a higher-level set of variables in the hierarchy are constituted by a plurality of variables from the next-lower-level in the hierarchy.

5. A method of solving Automatic Harmonization Problems, comprising the steps of formulating the automatic harmonization problem as a Constraint Satisfaction Problem, and solving the thus-formulated Constraint Satisfaction Problem according to the method of any previous claim, wherein the first set (V1) of variables corresponds to musical notes and the second set (V2) of variables corresponds to chords.

6. A coustraint-satisfaction-problem-solving system, comprising:
a) means for defining a first set (V1) of variables,
b) means for defining a second set (V2) of variables, the or each variable of the second set of variables being constituted from a plurality of variables from the first set of variables, such that a hierarchy of variables is created in which variables of the second set are at a higher level and variables of the first set at the next lower level in the hierarchy,
c) means for formulating the constraint satisfaction problem in terms of a set of constraints to be satisfied, at least one of the constraints holding on variables in the second set, and
d) means for resolving the constraint satisfaction problem,
wherein the constraint-satisfaction-problem-formulating means is adapted to:
i) create a first constraint satisfaction problem (P1) whose variable set is said first set (V1) of variables,
ii) apply a consistency algorithm to the first constraint satisfaction problem whereby to reduce the size of the domains of the variables in said set (V1), and
iii) reduce the domain of each variable (v2) in the second set (V2) which has one or more variables (v1) of the first set as a constituent part, by restricting the domain of each such variable (v2) of the second set with respect to the reduced domain of the corresponding variable from the first set.

7. A consrraint-satisfaction-problem-soliving system according to claim 6, wherein the constraint-satisfaction-problem-formulating means is further adapted to:
iv) create a second constraint satisfaction problem (P2) whose variable set is the union of the first (V1) and second (V2) sets of variables after domain reduction and whose constraint set is the union of the constraints (C₂) holding on the second set of variables and the constraints (C_{mixed}) holding both on variables of the first set (V1) of variables ad on variables of the second set (V2) of variables.

8. A constraint-satisfaction-problem-solving system according to claim 6 or 7, wherein the variables of said first set of variables (V1) correspond to entities which cannot be reduced into smaller components.

9. A constraint-satisfaction-problem-solving system according to claim 6, 7 or 8, and comprising means for defining one or more further sets of variables to form respective further levels in the hierarchy of variables, such that variables in a higher-level set of variables in the hierarchy are constituted by a plurality of variables from the next-lower-level in the hierarchy.

10. An automatic harmonization unit, comprising means for formulating the automatic harmonization problem as a Constraint Satisfaction Problem, and a system according to any of claims 6 to 9 for solving the thus-formulated Constraint Satisfaction Problem, wherein the first set (V1) of variables corresponds to musical notes and the second set (V2) of variables corresponds to chords.
